# EUROPEAN PATENT SPECIFICATION

(11) **EP 3 519 508 B1**
(45) Date of publication and mention of the grant of the patent: **28.06.2023**
(21) Application number: 17723512.4
(22) Date of filing: 31.03.2017
(51) Int. Cl.: C09D 5/33, C08K 3/22, C08K 3/34, C08K 3/36, C09D 175/04, C09D 175/06, C09D 175/08, C08L 67/00, C08L 71/02, E01F 9/506

(54) **COMPOSITIONS FOR ROAD OR FLOOR MARKINGS**
ZUSAMMENSETZUNGEN FÜR STRASSEN- ODER FUSSBODENMARKIERUNGEN
COMPOSITIOS DE MARQUAGES ROUTIERS OU AU SOL

(30) Priority: 01.04.2016 RO 201600232
(43) Date of publication of application: 07.08.2019
(73) Proprietor: S.C. Vesta Investment S.r.l., 075100 Otopeni (RO)
(72) Inventor: SPIREA-ANDREI, Radu-Stefan, Bucuresti (RO); POPA, Dan Alexandru, Bucuresti (RO)
(74) Representative: Enescu, Miruna
(86) International application number: PCT/IB2017/051852
(87) International publication number: WO 2017/168380

(56) References cited:
- WO-A1-97/18947
- CA-A1- 2 242 132
- US-A- 4 752 502
- US-A1- 2003 130 368
- US-A1- 2005 100 709
- US-A1- 2011 151 113
- DATABASE WPI Week 201606 Thomson Scientific, London, GB; AN 2016-019338 XP002772325, & KR 2015 0144875 A (SAMHWA PAINTS IND CO LTD) 29 December 2015 (2015-12-29)

## Description

The present invention relates to resin compositions for polyurethane paints for road markings or floor markings, to methods for their preparation and to uses thereof as well as to polyurethane paints for road markings or floor markings and to road markings or floor markings obtained therefrom.

Various resin compositions for polyurethane paints for road markings or floor markings are known, such as the water-based or organic solvent-based poliurethane paints. Also various resin compositions for thermoplastic paints to be applied at high temperature are known.
Patent US4,752,502 discloses a process for forming a paint marking on a roadway surface using a paint composition comprising a paint vehicle with nitrocellulose, a polymeric hydorxialkyl acrylate modifier, an isocyanate resin as the binder, a solvent and pigment in an amount sufficient to color the paint composition. The resin to filer ratio of this composition is of about 1 : 2, which, together with the use of nitrocellulose and solvent allows the composition to be applied in very thin film, but not to stably incorporate glass beads having diameters of over 800µm for a good retroreflection. Moreover, the nitrocellulose is dissolved in the volatile solvent methyl ethyl ketone (butanone), which is a toxic volatile compound that is a hazardous air pollutant.
In the DATABASE WPI, week 201606, Thomson Scientific, London, GB; AN 2016-019338 XP002772325, & KR 2015 0144875 A (SAMHWA PAINTS IND CO LTD) 2015-12-29 there is disclosed a polyurea paint to be coated on pots comprising, among other ingredients, isocyanate and filler. However, such a paint is not suitable for road or floor markings, since it does not properly adhere to asphaltic substrates and since it is a polished paint and therefore unsuitable for traffic.
Patent application CA2242132A1 discloses a one-component polyurea coating composition curable at ambient temperature, comprising a quasi-prepolyumer isocyanate and a polyamide resin. Some embodiments of this document disclose the use of a pigment, wherein the ration resin:pigment is of about 5:1.
US 2003/0130368 A1 provides a method for the treatment of fillers with organic phosphate treatment agents and suspending such treated fillers in polyols for manufacturing polyurethane foams. However, such polyurethane foams are not suitable for preparing paints.
US2011/0151113A1 relates to coating compositions prepared from formulations including multiple components including at least a polyisocyanate and at least one polyamine and at least one polyol. Said polyol is introduced in an attempt to control reactivity and curing speed.

The paints for road markings used at present have the following disadavantages:
- slow drying - the paints for road markings or floor markings already known have a high drying time (from about 30 minutes up to even 24 hours), which makes necessary to establish traffic restrictions for their application (temporarily closing or diverting the traffic) by the use of some specific signalling elements (reflective cones, beacons, indicators, traffic lights, traffic directing agents) that have to be removed subsequently. The whole process of applying these paints is carried out by exposing to injury risks the persons applying these road markings from the moment of instituting the traffic restrictions up to the moment of lifting the traffic restrictions;
- pollution - various paints for road markings, such as the ones based on organic solvents, contain volatile components that are toxic for humans and pollutant for the environment; the thermoplastic paints not containing volatile organic components are applied by means of a pollutant method of burning fuel in order to bring and maintain the materials at the application temperatures of 160-200°C;
- low durability - the road markings wear out, particularly in conditions of heavy traffic. In order to increase the durability of the markings, at present paints are used that are applied in a thick layer (up to 9000 µm applied layer), an example being the hot-applied thermoplastic paints; the high consumption of material and the application technology, however, generate high costs and there also occurs the risk of accidents, for example of the motorcyclists upon crossing such thick-layered markings;
- loss of retroreflection and visibility during the rain - the visibility of the road markings during the night is obtaind by incorporating glass beads which reflect the light of the road vehicles headlamps. To this end, the use of some large size glass beads (with the diameter higher than 800 µm) is recommended, whose light reflection capacity is higher in comparison with the glass beads of smaller dimensions. Due to the low durability (low wear resistance) of the paints known at this moment, the layer of incorporated beads at the markings surface is eliminated in relatively short time of using the marking, which thus loses its retroreflection capacity. This problem was solved by the use of thermoplastic paints applied in a thick layer (2000 µm up to 9000 µm), which are more expensive but are the only ones so far that can incorporate large size glass beads in the paint composition. However, the glass beads sink ino the composition of these paints and come to the surface only after the marking layer is worn out, so that the marking layer does not show immediate retroreflection (immediately after the application). Moreover, since the known polyurethane paints have low wear resistance, the glass beads have to be incorporated therein in a proportion of at least 60% in order to remain caught in the paint. During the night and in rainy weather, the markings visibility is also conditioned by a good drainage of water, whose presence on the marking surface reduces the retroreflection level of the glass beads. The continuous markings applied in thick layer prevent the drainage of water though, and that is why they must be interrupted at certain length intervals by drainage ditches; another solution for this drainage problem is the multidot application of the marking paint (paint spots having dimensions of 2-7cm long, spaced apart from one another and randomly positioned). However, the legislation adopted in various countries in respect of the road traffic security does not allow the application of multidot road markings for all types of markings, these being a solution particularly for carrying out the marginal markings;
- low elasticity - the substrate vibrations, particularly in heavy traffic zones, cause transverse cracks in the road marking films, particularly in cold weather when these become extremely rigid;
- low adherence to glossy concrete supports, worn out rocky asphalt or cubic stone (granite, basalt) - this leads to the need of using a primer for ensuring the adherence, which leads to additional costs when applying on such supports, and may have effects on the environment due to the chemical composition;
- costs - the road markings paints with adequate resistance, applied in a thick layer, have high costs both in terms of the materials and of the application, while the use of inexpensive marking paints, applied in thin layer, generate the necessity of frequent rebuilding of the road marking, thus also involving additional costs; another aspect is that related to the costs associated with the necessity of frequently restricting the road traffic;
- low resistance to external chemical agents (accidental spill of substances, saline solutions etc) - these affect the road markings and generate the necessity of the frequent rebuilding thereof, which also generate additional costs;
- low resistance to the actions related to winter maintenance (snow removal, removal of glazed frost) - leads to the necessity of rebuilding the road markings where the snow removal plogh blades scraped the marking or where the saline solutions corroded the material thereof;
- restrictions relating to the use indoors - due the problems related to the high content of volatile chemical compounds of some of the marking paints, but also due to the restrictions related to the dimension of the space required for handling the marking equipments in case of applying thermoplastic paints, in closed spaces (parking lots, stores, halls etc), at present, almost exclusively water-based paints can be used for road and for floor markings;
- difficulties related to the application technology - each of the road marking paints exhibit a certain level of difficulty with regard to the application: the water based paints dry in a longer period of time; in case of the monocomponent paints based on organic solvents and even of some bicomponent paints containing a certain percentage of solvent, the evaporation thereof during the application operations involve the frequent adjusting of the viscosity by the addition of diluents; there also occur restrictions rated to the transport of the material on-site (they require transport in compliance with the norms relating to the transport of dangerous substances), and since these are inflammable products, there exists the risk of some events that may have severe consequences both for the staff performing such activities and for the environment; the thermoplastic paints are applied at high temperature and involve the use of some special equipments which can bring the paint to such high temperatures (of up to 200°C), a great effort upon handling, injury risk upon transferring the hot material from the preheater into the marking machine tank, a high fuel consumption, said fuel being burnt for heating the material (and which generates noxious emissions into the air); the polyureea-based paints that may be applied by spraying and dry rapidly have high costs of materials and cannot be applied in a single step, but necessitates the previous application of a primer, involving high application times and high labor costs.

The present invention is directed towards obtaining a resin composition for a paint for road markings or floor markings which should confer the paint increased durability, good adherence to the support, possibility of rapid drying, possibility of being applied both in thin layer and in thick layer, a good incorporation of the glass beads, including those having a diameter larger than 800µm, a good water drainage, higher elasticity, and which is non-pollutant, while maintaining low production costs.

The resin compositions for polyurethane paints for road markings or floor markings according to the invention, eliminate the above-mentioned disadvantages in that they comprise at least one polyol and at least one filler having the particle size less than 500µm, wherein the polyol and/or polyether diamine to filler mass ratio is from 1:3 to 1:8, preferably 1:4. The resin compositions thus obtained can be combined with one or more aliphatic and/or aromatic isocyanates for the preparation of polyurethane paints for road markings or floor markings and having the above-mentioned advantages.

By "at least one polyol and/or polyether diamine" it is meant one or more polyether polyols and/or polyether diamines, one or more polyester polyols or combinations thereof. From the polyether polyol class there are preferred the ethylene or propylene derivatives (polyethylene glycol, polypropylene glycol, poly(tetramethylether)glycol), or polyetherdiamines, and from the polyester polyols there are preferably used compounds of the saccharide class (for example, saccharose, sorbitol).

Said "at least one filler having the particle size less than 500µm" is a filler wherein the particle diameter does not exceed 500µm. Preferably, less than 1% of the filler particles have the diameter of 500µm or close to this size, and most of the particles have sizes less than 300µm. Said filler may comprise any filler used for manufacturing the paints for markings and may comprise, by way of example, one or more components selected from dolomite, quartz, calcium carbonate, talcum, titanium dioxide, sand, ground marble.

The use of a filler having the particle size less than 500 µm allows the polyurethane paint prepared with this filler to dry more rapidly and to be applied directly and rapidly, in a sigle layer, without requiring a primer, inclusively in a thin layer, by pressure spraying, while maintaining low costs.
From the mentioned fillers, we have found that the use of dolomite as filler in a mentioned composition, in which the mass ratio between the polyol and/or polyether diamine and filler is from 1:3 to 1:8, preferably 1:4, is particularly advantageous, since dolomite proved to have the most adequate density, viscosity and hardness values, so that, by its use, there are obtained paint films with increased resistance to the climatic factors, with increased mechanical stability, since the internal stress and the film tendency to shrink are reduced, thus eliminating the possibility of developing cracks and absorbing water, and the high hardness and better resistance to acidic media of the dolomite increases the durabilility of the polyurethane paint containing the same. Due to the fact that dolomite has high purity, degree of natural white, homogenous crystalline structure and narrow particle size distribution, it makes the paint obtained therewith to have increased retroreflection, since it will closely surround the glass beads and will make them function like mirrors, reflecting the light in a very high proportion.

In a preferred embodiment, a mixture of two assortments of dolomite is employed: small dolomite, with particle sizes in the range 100 - 200µm and large dolomite, with the particle sizes in the range 106 - 500 µm, in a small dolomite : large dolomite mass ratio of 6:1. Preferably, about half of the amount of small dolomite has particle sizes less than 100 µm. This dolomite mixture proved to bring surprising improved properties to the composition: better flow, an optimum price/quality ratio and a maximal effect of the durability performances, retroreflection and slip resistance. At the smae time, the use of the two assortments of dolomite in the mentioned ratio ensures the possibility of spraying the product due to the specific particle dimensions, the spraying mixture being prepared in a high pressure mixing chamber.

In another preferred embodiment, said "at least one filler" comprises dolomite, preferably the aforementioned small and large dolomite mixture, and at least 7.5% by weight of titanium dioxide. Dolomite and titanium dioxide will confer the marking opacity, which increases the retroreflection degree independently of the incorporation of the glass beads. In order to obtain white markings, there is preferably used a filler comprising dolomite and titanium dioxide (TiO₂), in a mass ratio from 10:1 to 15:1. The titanium dioxide in this filler also functions as a pigment; the obtained road marking fulfilling the standards in force with regard to the degree of white. A ratio dolomite:titanium dioxide of 12:1 is preferred, which ensures an optimun price/quality ratio. It was ascertained that the use in the paint for road markings or floor markings of a filler:polyol and/or polyether diamine mixture, wherein the filler consists of a dolomite:titanium dioxide mixture in a ratio of 12:1, ensures the formation of a compact paint layer with increased opacity, as well as with an optimum density ensuring a uniform distribution of the glass beads sprayed concomitantly with the paint application, there being prevented the sinking thereof in the freshly applied film, which contributes to a considerable increase of the retroreflection level and of the slip resistance. The slip resistance may be additionally improved by introducing a limited percentage of quartz into the filler, which confers a certain degree of roughness to the paint. A preferred filler, which optimally combines the mentioned properties and advantages of the dolomite, titanium dioxide and quartz has a dolomite:titanium dioxide:quartz ratio of 6:1:1.

In another preferred embodiment, for obtaining a polyurethane paint for road marking that may be applied by spraying, said "at least one filler" will have the particle size in the range 20-200µm in diameter, preferably from 100 and 150µm.

The resin composition according to the invention comprises an amount of filler significantly higher than the similar compositions known for paints for road marking and floor marking, wherein the mass ratio between the polyol and/or polyether diamine component and the filler is generally of approximately 1:1. In order to be used in conditions of heavy traffic, these known compositions involve high costs, generated by the high amount of polyols employed in order to obtain a road marking paint to be applied in a layer having the necessary thickness to present the performances of the road markings requested by the regulations in force in various jurisdictions all over the world. In the present invention, it was surprisingly ascertained that the increase of the percentage of filler incorporated into the composition, when fillers with the particle size smaller than 500µm are used, particularly fillers based on dolomite, as previously described, confer to the polyurethane paint obtained with the resin composition: increased durability, anti-slip texture, and high opacity which amplifies the retroreflection level, contributing to increasing visibility, with a low unitary cost, high productivity; and the preferred compositions stated hereinafter may be used in paints for road markings and floor markings applied advantageously (efficiently in respect of the costs) in a thin layer (of 400-800µm), which shows, however, the performances of the road markings in thick layer (of minimum 2000 µm). At the same time, the high filler percentage according to the invention leads to increasing the density of the composition, which makes the glass beads to remain at the surface upon their incorporation (they no longer sink into the composition), so that the road marking will show immediate retroreflection (immediately after the marking application). Moreover, the use of a filler having the particle size less than 500µm confers unexpected flow capacity and ease in application for a paint comprising a high amount of fillers.

However, the high amount of filler in the resin composition according to the invention leads to increasing the composition viscosity, which may cumber its application with the existing equipments, other than manually. In order to obtain a resin composition with the mentioned properties and advantages, from which to prepare a paint for road markings or floor markings which is easy to apply including by the screed/shoe method or by spraying in a thin layer, it is desirable to improve even more the flow of the composition. This was achieved by adding to the resin composition of filler wetting agents and/or viscosity modifying agents. Obviously, by wetting the filler the viscosity of the composition will also be modified: therefore, the filler wetting agents and the viscosity changing agents may consist of the same substances.

The filler wetting agents according to the invention are added to the filler preferably in an initial step, prior to adding said one or more polyols and/or polyether diamines, and the viscosity modifying agents according to the invention are added to the resin composition preferably after mixing the polyol and/or polyether diamine with the filler.

The selection of viscosity modifying agents and/or filler wetting agents for improving the paint flow according to the invention, as well as of the proportion in which these may be added is not easy, due to the fact that many of these may interact with the components in the paint, which may lead to undesirable changes of the paint properties. It was ascertained that the viscosity modifying agents and/or the filler wetting agents mentioned hereinafter, used in the stated concentrations, do not undesirably change the properties of the polyurethane composition and of the polyurethane paint obtained thereform, and bring considerable improvements to the composition, as it will be further specified, including an improved flow, allowing the application of the polyurethane paint in a single application, with standard equipments, including by spraying, and obtaining low drying times.

Thus, the resin composition may comprise 1.0 - 10.0%, preferably about 5.0%, by weight based on the amount of filler of at least one filler wetting agent, selected from the class of silicone surfactants (particularly polydimethylsiloxanes modified with polyethers). A resin composition including one or more said wetting agents is advantageous in terms of costs, since it may incorporate a lower percentage of polyol and/or polyether diamine based on the final amount of the resin composition, while maintaining the performances of the composition, since the filler wetting agent prevents the filler from absorbing an excess of polyols, while increasing the filler compatibility with the polyol and/or polyether diamine component. In addition, the use of a said filler wetting agent will lead to flow improvement, and consequently to an ease of application of the polyurethane paint obtained from this composition, to reducing the time of dispersion of the filler when mixting with the polyol and/or polyether diamine composition, to improving the storage stability of the resin composition, and to improved adherence to the support and durability of the polyurethane paint obtained from the resin composition. At the same time, the use of a mentioned filler wetting agent advantageously prevents the filler from absorbing other components, such as polymerization catalysts, which will be thus free to interact with the polyols.

The resin composition comprises, in percentage by mass based on the amount of resin composition, 0.5 up to 10% of at least one agent modifying the viscosity of the resin composition, selected from 2-ethyl-hexyl-stearate,which has dual activity, both on the filler (improving the flow) and on the isocynate component of the polyurethane paint (rendering it compatible with the remainder of the components). For a resin composition that is used for the preparation of a polyurethane paint applied by extrusion or screed/shoe/manual, said at least one viscosity modifying agent is added in an amount of 0.5 up to 5.0%, preferably 3% in percentage by mass based on the total amount of resin components. For a resin composition used for preparing a polyurethane paint applicable by spraying, said at least one viscosity modifying agent is added in an amount of 2 to 10%, preferably 5.0%, by mass based on the total amount of the resin composition.

The said viscosity modifying agents, besides improving the flow properties of the composition, also confer other advantages to the road marking or floor marking paint obtained from the resin composition containing them, namely elasticity increase (resistance to elongation) and flexibility increase (resistance to vertical vibrations). All these advantages are obtained without adverse effects (toxicity, slow drying) conferred by the use of some organic solvents or water as viscosity modifying agents and without undesirably changing the properties of the polyurethane composition and of the polyurethane paint obtained therefrom.

As previously shown, for improving the flow of the composition both said filler wetting agents and/or said viscosity modifying agents can be used, which agents that may consist inclusively of the same substances. Preferably, when both the filler wetting agents and viscosity modifying agents are added, the total amount of both agents added does not exceed 10% of the weight of the resin composition.

The resin composition may additionally comprise one or more of the following components, known in the state of the art: at least a polymerization catalyst, at least a pigment, glass beads.

The resin composition may further comprise, in percentage by mass based on the mass of the polyol and/or polyether diamine composition, 0.2 up to 1.2%, preferably 0.8%, of at least a polymerization catalyst selected from the class of the organo-metallic compounds such as, for example, bis(dodecyl-thio-dioctyl)-stannane, which is frequently used in the polyurethane compositions. The amount of said polymerization catalyst added is selected depending on the drying time desired for the polyurethane paint for road marking prepared with the resin compositon according to the invention. Thus, depending on the other components of the paint and on the application temperature, a paint prepared with a resin composition according to the invention without the addition of a polymerization catalyst is dried in a time range from 2 to 5 hours. Upon adding an amount of 0.2 up to 1.2% polymerization catalyst by weight based on the resin composition, the paint will dry in a time range of 0.5 up to 3 minutes. Within this range, various desired drying times may be obtained by adequately adjusting the polymerization catalyst percentage. A low drying time will allow rapid resumption of traffic, without the necessity of imposing any traffic restrictions.

The poliol resin composition can additionally comprise at least one pigment selected from the usual pigments for paints, such as: titanium dioxide, phthalocyanine pigments (blue and green), carbon black, black iron oxide etc, thus being possible to produce any desired marking color. Preferably, the amount of pigment is of 5 - 10%, preferably 6%, of the resin composition mass.

Preferred resin compositions according to the invention comprise, in percentage based on the total mass of the composition:
- 10-20% of said at least one polyol and/or polyether diamine,
- 40-80% of said at least one filler, previously treated with said at least one filler wetting agent in an amount from 1.0 to 10.0%, preferably 5.0%, based on the mass of the filler;
- 0.2 -1.2%, preferably 0.8%, of said at least one polymerization catalyst,
- 0.5-10.0% of said at least one viscosity modifying agent,
- optionally, at least one pigment and/or glass beads.

A preferred resin composition **(I)** adequate for preparing a polyurethane paint for road markings or floor markings applicable by the extrusion or screed/shoe/manual methods, comprises, in percentage based on the total mass of the composition:
- 10-20% of said at least one polyol and/or polyether diamine,
- 40-80% of said at least one filler, previously treated with said at least one filler wetting agent in an amount from 1.0 to 10.0%, preferably 5.0%, of the filler mass,
- 0.2-1.2%, preferably 0.8% of said at least one polymerization catalyst,
- 0.5-5.0%, preferably 3.0% of said at least one viscosity modifying agent. This preferred resin composition **(I)** may be used for producing a polyurethane paint for road markings or floor markings applicable by the extrusion or screed/shoe/manual methods, with higher qualities and low costs, with good adherence to the support, an excellent incorporation of the glass beads, optimal anti-abrasion characteristics and opacity, as well as rapid drying (within 1 to 2 minutes) due to the polymerization catalyst.

A preferred resin composition **(II)** adequate for preparing a polyurethane paint for road markings or floor markings, applicable in thin layer, for example by spraying, comprises, in mass percentage based on the total mass of the composition:
- 10-20% of said at least one polyol and/or polyether diamine,
- 40-80% of said at least one filler, wherein said at least one filler has a particle diameter ranging from 20 to 200µm, preferably from 100 to 150µm, previously treated with said at least one filler wetting agent in an amount from 1.0 to 10.0%, preferably 5%, of the filler mass,
- 0.2 to 1.2%, preferably about 0.8%, of said polymerization catalyst,
- 2.0-10.0%, preferably 5.0%, of said at least one viscosity modifying agent. This preferred resin composition **(II)** may be used for producing a polyurethane paint for road markings or floor markings applicable by spraying in a thin layer, for example of 400µm up to 800 µm, with high qualities and low costs, with good adherence to the support, an excellent incorporation of the glass beads, optimal anti-abrasive characteristics, flexibility, and elasticity, rapid drying and ease of application and of cleaning the equipments used.

In another aspect of the invention, there is provided a method for preparing a resin composition according to the invention. The resin composition according to the invention can be prepared according to the usual methods employed in the field, by mechanical mixing, in a suitable container, of said at least one polyol and/or polyether diamine with said at least one filler up to homogenization. For the compositions comprising filler wetting agent, the method comprises a previous step of mechanical mixing of said at least a filler with said at least one filler wetting agent for 4 hours to 2 days. For the case when it is desired to preserve the resin composition for subsequent use, the method comprises an additional step of tight sealing the composition prepared in the preceding step either in the container wherein it was prepared, or in another suitable container. For the compositions comprising one or several of the mentioned additional optional components, the method comprises a step of adding, while mixing, one or more of said at least one polymerization catalyst, at least one viscosity modifying agent, at least one pigment, aggregates, glass beads etc. This step can take place before the step of tight sealing the composition in the adequate container or subsequently, after opening the tightly sealed container, for example at the location of marking application.

In another aspect of the invention, a polyurethane paint for road markings or floor markings is provided, which comprises a resin composition described above and an isocyanate component consisting of one or more aliphatic and/or aromatic isocyanates, in a mass ratio resin composition : isocyanate from 1:0.5 to 10:1.

Said "one or more isocyanates" may be aliphatic and/or aromatic isocyanates, preferably selected from diphenylmethane diisocyanate (MDI), hexamethylene diisocyanate (HDI) or mixtures thereof. Diphenylmethane diisocyanate (MDI) confers the polyurethane paint high wear resistance, increased capacity of incorporating the glass beads and more rapid drying, while the hexamethylene diisocyanate (HDI) confers on the polyurethane paint elasticity and flexibility, as well as resistance to UV radiation. In a preferred aspect of the invention, said "one or more isocyanates" consist of a mixture of 0-20% diphenylmethane diisocyanate (MDI) and 80%-100% hexamethylene diisocyanate (HDI) in perentage by mass, preferably about 20% MDI and 80% HDI.

The use of a high amount of filler (particularly dolomite) in the resin component will lead to the formation in the isocyanate component of aromatic-type and particularly aliphatic-type bonds, which confer the thus obtained paint a compact and rough structure (high anti-slip properties by comparison with a low amount of filler).

Optionally, for the purpose of improving the UV resistance of the paint, an UV additive (comprising a mixture of antioxidant, UV absorber and sterically hindered amine (HALS)) may be added to the isocyanate component, and that will allow to obtain an UV resistant paint even when a low amount or when no HDI is used.

The polyurethane paints for road markings or for floor markings according to the invention have the advantage of high durability (they are 3 to 8 times more durable than the paints of the same layer thickness used at present, in identical traffic conditions), being resistant to heavy traffic conditions, to strikes inclusively strikes with the snow plough blades, hoofs etc. At the same time, they are not polluting, and so can be used indoors, have high elasticity and flexibility, allow the drainage of water without the necessity of interrupting them. They also have good resistance to winter activities (snow removal, saline solutions etc.) and good adherence to the substrate, including to difficult substrates (helicopter concrete, granite, basalt, marble etc.), while maintaining low costs by the use of a high proportion of filler in the paint composition as well as by the possibility of being applied in a single application and/or in a thin layer of the paint, while maintaining high performances of the road marking or floor marking.

At the same time, the paints for road markings or for floor markings, according to the invention, both those applied by spraying and those applied by the extrusion or screed/shoe/manual methods allow the incorporation, simultaneously with or after the application of the paint to the support, while the paint surface is still wet, of glass beads, inclusively large diameter glass beads. It is known in the field to obtain the retroreflection characteristic of a road marking by incorporating therein some glass beads that reflect the light of the motor vehicle headlamps. An advantage of the paint for road marking according to the invention is the fact that, due to the high density conferred by the filler according to the invention, it stably incorporates glass beads with the diameter size in the range of 150-1200µm, even for paint films applied at thicknesses of 400-800µm. It is known the fact that the high dimension glass beads (with the diameter larger than 800µm) have a retroreflection capacity higher than that of the lower dimension beads and confer a good visibility on the marking whereon they are applied. The only known paints for road markings that can incorporate said large dimension glass beads are, at this moment, the paints with high thicknesses of the applied layer (of 2000 µm to 9000 µm ), which have to incorporate in their thickness the glass beads in a proportion of at least 60% of the beads volume, because, otherwise, the beads will be very quickly and easily removed as a consequence of the wear caused by the traffic. However, in the known markings applied in a thick layer, the glass beads sink in thickness of the paint, so that the marking lacks initial retroreflection (immediately after the application) and, only after a period, needed in order for the glass beads incorporated therein to reach the surface by the paint wear. Moreover, as previously shown, the high material consumption and the technology of application at high temperature used for the known road markings applied in a thick layer generate high costs and, on the other hand, their high thickness may be a risk of injury, for example, for motorcyclists upon their crossing these markings. At the same time, these markings applied in a thick layer do not allow for a good drainage of water.

The polyurethane paints for road markings or floor markings according to the invention solve all these problems in that they have a composition which allows supporting the glass beads having a diameter larger than 800µm even if the beads sink only in a proportion of 40% or less in the applied paint layer, due to the high density given by the filler, which allows the incorporation of these glass beads having a diameter larger than 800µm also for road marking paints applied in a thin layer (less than 800µm). Particularly, the use as filler of dolomite and of the aforementioned mixtures thereof, will also lead to increased retroreflection, since dolomite will closely surround the glass beads and will make them function like mirrors, reflecting the light in a very high proportion. At the same time, the polyurethane paints for road markings or for floor markings according to the present invention have very good wear and abrasion resistance, which makes the glass beads to remain incorporated in the paint for a long time, even in conditions of heavy traffic.

A preferred polyurethane paint for road markings or floor markings, applicable by the extrusion or screed/shoe/manual methods comprises the preferred above-described resin composition **(I)** and one or more isocyanates selected from hexamethylene diisocyanate (HDI), diphenylmethane diisocyanate (MDI) and combinations thereof (preferably a combination of HDI:MDI in a mass ratio of 4:1), in a mass ratio resin composition **(I)** : isocyanate component from 5:1 to 10:1, preferably in a ratio of 6.5:1. The thus obtained polyurethane paint for road markings or floor markings can be applied by extrusion or screed/shoe/manual on asphalt supports and on difficult supports: concrete, glossy, treated, self-leveling screeds etc, in various thicknesses of the paint layer, such as, for example, 1000µm, 2000µm, 3000µm, and shows a good adherence to the support, is applied in a single layer, dry rapidly (in about 1-2 minutes), has a good UV resistance, high elasticity, abrasion resistance and a good incorporation of the glass beads, inclusively of the large glass beads with a diameter larger than 800 µm, there being obtained a road marking with immediate retroreflection and of excellent quality, including during night/wet conditions. It was experimentally ascertained that, though the qualities of this polyuretane paint for road markings or for floor markings remain superior to other known paints irrespective of the selected type of isocyanate, the use of MDI isocyanate in the composition of this polyurethane paint for road markings or for floor markings leads to better adherence of the glass beads on the marking surface and a better abrasion resistance thereof than in case of the use of HDI isocyanate which, however, confers a better elasticity, flexibility and UV resistance. Therefore, and also considering the related costs, it is advantageous the use of an isocyanate component consisting of a mixture made up of 20% MDI and 80% HDI.

A preferred polyurethane paint for road markings or floor markings applicable in thin layer, for example by spraying, comprises the preferred above-described resin composition **(II)** and an isocyanate selected from hexamethylene diisocyanate (HDI), diphenylmethane diisocyanate (MDI) and combinations thereof, in a mass ratio resin composition **(II)** : isocyanate of 1:0.5 up to 6:1, preferably of 5.1. For a good drying of the paint, as well as for an UV resistant road marking and with high durability, said isocyanate is preferably a combination of HDI and MDI in a HDI: MDI mass ratio of 4:1. The polyurethane paint for road markings or floor markings thus obtained can be applied, for example, by spraying onto asphalt supports and onto difficult supports: concrete, glossy, treated concretes, self-leveling screeds etc, in various thicknesses of the paint layer, such as of 400µm, 600µm, 800µm. This paint shows good adherence to the support, it is applied in a single layer, with a very rapid drying (for example, less than 25 seconds for a paint previously conditioned at a temperature of 40-80°C, preferably 50°C) and consequently, the application thereof does not require signaling with cone type elements or other signaling elements, possibly traffic management or diversion, the signaling of the application equipment being sufficient. Thus, the time of exposing the persons applying the road marking on the carriageway area is much reduced and their injury risk is correspondingly diminished. This polyurethane paint has also a good UV resistance, high elasticity, optimum abrasion resistance, shows a good incorporation of the glass beads on the marking surface, inclusively of the large glass beads, with the diameter larger than 800µm, showing an extremely high immediate retroreflection, inclusively during night/wet conditions. At the same time, this preferred polyurethane paint for road markings or floor markings applicable by spraying, has the advantage of great ease in application as well as in cleaning the equipments employed, a high productivity, while lowering the costs and with the possibility of using templates for the road marking elements (arrows, zebra crossing markings, hatches, pastiles etc). The extremely rapid drying allows a considerable diminishing of the traffic stopping/diversion, particularly in cities or on heavy traffic roads.

In another aspect of the invention, there is supplied a kit for preparing the above-mentioned polyurethane paints, which comprises:
(a) a first component containing:
   - at least one polyol and/or polyether diamine and at least one filler having the particle size less than 500µm, wherein the mass ratio polyol and/or polyether diamine to filler is from 1:3 to 1:8, preferably 1:4;
      as well as
   - 1.0 -10.0%, preferably about 5.0% of the mass of said filler of at least one filler wetting agent, said wetting agent being selected from the silicone surfactant class (for example, polydimethylsiloxanes modified with polyethers) or from 2-ethyl-hexyl-stearate and/or
   - 0.5-10% of the total resin composition mass of at least one viscosity modifying agent selected from 2-ethyl-hexyl-stearate,
      and, optionally,
   - 0.2 up to 1,2%, preferably 0.8%, of the total mass of resin composition of at least one polymerization catalyst selected from the organo-metallic compounds class, such as, for example, bis(dodecyl-thio-dioctyl)-stannane; and/or
   - least one pigment, aggregates and/or glass beads, and
(b) a second component comprising one or more aliphatic and/or aromatic isocyanates comprising diphenylmethylene diisocyanate (MDI), hexamethylene diisocyanate (HDI) or a mixture thereof, preferably in a HDI:MDI mass ratio of 4:1,
in a mass ratio of component (a) to component (b) from 1:0.5 up to 6:1.

The kit according to the invention has for all the above-mentioned optional elements the percentages mentioned in the description of the resin composition and of the isocyanate component. The kit allows for the components to be independently prepared, stored in containers and transported to the users, who can mix these components to obtain the desired paint for road markings or floor markings. The selection of the components and of the percentages of the elements in each kit may be calibrated such that the final user to be able to obtain therefrom various variants of paints having various predetermined properties (for example for application in thick or thin layer). Optionally, the mentioned polymerization catalyst may belong to component (b) of the kit instead of component (a).

In another aspect of the invention, there are provided methods for preparation and application on the support of the road markings or floor markings of the invention.

The method of preparation of the polyurethane paints for road markings or floor markings of the invention, comprises the step of mixing up to homogenization the resin composition of the invention, prepared according to its method of preparation described above, and said one or more isocyanates.

There is also provided a preferred method of preparing in airless system of the polyurethane paints for road markings or for floors markings according to the invention, applicable in a thin layer, which comprises the following steps:
- transfer of the components consisting of the preferred resin composition **(II)** prepared according to the above-described preparation method, and of said one or more isocyanates from the respective containers, optionally heated to 30-40°C, in a mixing chamber of an application device, for example a spraying gun, optionally concomitantly with bringing the components to a temperature from 40°C up to 80°C, preferably about 50 °C.
- mixing the components in the mixing chamber, in the absence of air, at a pressure from 60 to 400 barr, preferably about 200 barr, to obtain the polyurethane paint for road markings or floor markings.

The method of applying on the support of the polyurethane paints for road markings or floor markings comprises the following steps:
- application of the polyurethane paint obtained according to the method described above onto a support, and
- optionally, scattering, for example by spraying, glass beads onto the applied paint while it is still wet, preferably concomitantly with the preceding step.

In a preferred embodiment, there is provided a method for the application in thick layer of the polyurethane paints for road markings or floor markings, which comprises:
- application onto a support, for example by extrusion or screed/shoe/manual, in a layer having a thickness from 1000µm up to 8000µm, preferably of 1000µm, 2000µm or 3000µm, of a paint obtained according to the method of preparation described above, and
- optionally, scattering glass beads, for example by spraying, onto the applied paint, while it is still wet.

In another preferred embodiment, it is provided a method for the application in a thin layer of the polyurethane paints for road markings or floor markings, comprising:
- the application onto the support, for example by spraying, in a layer of a thickness from 400 µm up to 1000 µm, preferably of 400µm, 600µm or 800µm, of a paint obtained by the preferred previously described method of preparation in an airless system, and
- optionally, scattering glass beads, for example, by spraying onto the applied paint while it is still wet, preferably concomitantly with the preceding step.

In another aspect of the invention there are provided road markings or floor markings obtained by the application onto the support, by the above-described methods, of the above-described polyurethane paints for road markings or floor markings. Such road markings or floor markings can be, for example, on the one hand, road markings or floor markings applied in a thick layer or resonating (vibraline), obtained by the application of the polyurethane paint of the invention by extrusion or screed/shoe/manual, and on the other hand road markings applied in a thin layer by the method of application by spraying, with the possibility of using stencils for the elements of road marking (arrows, zebra crossing markings, hatches, pastilles etc). The road markings or the floor markings obtained by using the polyurethane paints of the invention have the above-described advantages (durability, anti-slip texture, opacity, retroreflection, elasticity, flexibility, resistance to mechanical, chemical agents, and UV radiation).

There are given hereinafter some embodiments of the invention:

### EXAMPLE 1 - CONTROL COMPOSITION

The resin composition was prepared as follows: in a metallic container there was mechanically mixed an amount of 1000g of a polyol mix (comprising polyether polyols) with 2000g of filler (consisting of 1200g of dolomite mixture, 200g of quartz, 200g calcium carbonate of various grain sizes, 400g TiO₂) previously wetted with 100 g of wetting agent, up to homogenization. After homogenization, an amount of 600g MDI isocyanate was added and mixed. The thus obtained polyurethane paint was applied on various surfaces (asphalt, concrete, self-leveling screeds, granite, marble) in thicknesses of 1000µm, 2000µm and 3000µm by extrusion or screed/shoe/manual. Onto the still wet surface of the paint there was sprayed for retroreflection a mixture of glass beads with diameters ranging from 125 to 850 µm, in an amount of about 350g/m² of applied paint.

The resulting road marking showed a drying time of approximately 2 hours, the glass beads almost totally sinking into the thickness of the paint layer, which led to a lack of immediate retroreflection (the glass beads fulfilling their role in respect o the retroreflection, only after the marking was worn out by the repeated passage of vehicles). At the same time, the resulting road marking showed a chromatic instability to UV and modified its colour in a short period of time, turning from white towards yellow.

### EXAMPLE 2

There was prepared the resin composition as follows: in a metallic container there were mechanically mixed an amount of 1000g of a polyol mix (consisting of polyether polyols) with 4000g of filler (consisting of 2400g of dolomite mixture, 400g quartz, 400g of calcium carbonate of various grain sizes, 800g TiO₂) previously wetted with 200g of wetting agent, up to homogenization. After homogenization, an amount of 600g MDI isocyanate was added and mixed. The paint thus obtained was applied on various surfaces (asphalt, concrete, self-leveling screeds) in thicknesses of 1mm, 2mm and 3mm by extrusion or by screed/shoe/manual. Onto the still wet surface of the paint retroreflection glass beads were sprayed in the form of a mixture having diameters ranging from 150 to 1200 µm, in an amount of about 350g/m² of applied paint.

The resulting road marking presented a good adherence to the substrate and a high abrasion resistance. At the same time, the resulting road marking showed a drying time of about 2 hours, but it was ascertained that, in comparison with the road marking of Example 1, the beads sank less into the thickness of the applied paint layer. The glass beads were incorporated in a proportion of 40-50% of their volume, and nevertheless, they presented good stability in the paint layer, so that they remained caught at the upper limit thereof, conferring a high and immediate retroreflection.

The longer drying period of about 2 hours, allowed for the cleaning of the shoe or application head after carrying out the marking.

### EXAMPLE 3

The resin composition was prepared as follows: in a metallic container there was mechanically mixed an amount of 1000g of a polyol mix (comprising polyether polyols) with 4000g of filler (comprising 3200 g dolomite and 800g TiO₂) that was previously wetted with 200g of wetting agent up to homogenization. After homogenization, there was added an amount of 800g of HDI isocyanate and mixed. The thus obtained polyurethane paint was applied on various surfaces (asphalt, concrete, self-leveling screed surfaces) at thicknesses of 1000µm, 2000µm and 3000µm by extrusion or screed/shoe/manual. Onto the still wet surface of the paint retroreflection glass beads were sprayed in the form of a mixture having diameters ranging from 150 to 1200 µm, in an amount of about 350g/m² of applied paint.

The resulting road marking showed a better UV resistance than the one in Example 2, but a decrease of the abrasion resistance and a weaker bond of the glass beads than the one conferred by the use of MDI isocyanate in Example 2.

### EXAMPLE 4

The resin composition was prepared as follows: there was mechanically mixed, in a metallic container, an amount of 1000g of a polyol mix (comprising polyether polyols) with 4000g of filler (comprising 3200g of dolomite and 800g of TiO₂) previously wetted with 200g of wetting agent and 30g of polymerization catalyst (bis(dodecyl-thio-dioctyl)-stannane) up to homogenization. After homogenization an amount of 800g of HDI and MDI isocyanate was added and mixed. The polyurethane paint thus obtained was applied onto various surfaces (asphalt, concrete, self-leveling creeds) in thicknesses of 1000µm, 2000µm and 3000µm by extrusion or screed/shoe/manual. Onto the still wet surface of the paint retroreflection glass beads were sprayed in the form of a mixture having diameters ranging from 150 to 1200 µm, in an amount of about 350g/m² of applied paint.

The resulting road marking presented a good adherence to the substrate, high elasticity, high abrasion resistance and an immediate retroreflection. At the same time, the resulting road marking presented a rapid drying, within about 1-2 minutes.

It was ascertained that the use of MDI isocyanate results in a road marking with good binding of the glass beads and a higher abrasion resistance, while the use of HDI isocyanate confers higher UV resistance.

### EXAMPLE 5

The resin composition was prepared as follows: there was mechanically mixed, in a metallic container, an amount of 1000g of a polyol and polyether diamine mix (comprising polyether polyols and polyetherdiamines) with 4000 g of filler (comprising 3000g of small and large dolomite mixture, 500g of quartz and 500g of TiO₂) previously wetted with 200g of wetting agent, with 25g of polymerization catalyst (bis(dodecyl-thio-dioctyl)-stannane) and with 260 g of viscosity lowering agent (of the 2-ethyl-hexyl-stearate type) up to homogenization.

Separately, 1000g of an isocyanate mixture was prepared comprising 800g HDI and 200g MDI.

The resin composition and the isocyanate composition were sucked from said containers heated to 30-40°C, by means of hydraulic pumps which carry out the transfer towards the preparation and application machine. The machine is equipped with a dosing device, a system for heating the material to temperatures in the range of 50-70°C and with hydraulic pumps that pump separately the two components (the resin composition and the isocanate composition), at the pressure of 200 barr, up to a spraying gun, where there are a mixture chamber and atomization nozzles. For maintaining and controlling the temperature, the components are transferred from the machine to the gun through electrically heated hoses. The polyurethane paint thus obtained was applied by spraying with the spraying gun onto various surfaces (asphalt, concrete, self-leveling creeds, including difficult surfaces, such as glossy, treated etc), in thicknesses of 400µm, 600µm and 800µm. The gun is also equipped with a cleaning system, in order to avoid its clogging by the reaction of the two components in the atomization nozzles.

Concomitantly, glass beads were sprayed for retroreflection onto the polyurethane paint layer, at a pressure of 1-2 barr, in the form of a mixture with diameters ranging from 250 to 1200 µm, in an amount of about 350 g/m² of applied paint.

The resulting road marking presented a good adherence to the substrate, an optimum abrasion resistance, high elasticity, good UV resistance and excellent incorporation of the glass beads, with an extremely high immediate retroreflection. The qualities of this road marking in a layer of 400-600 µm were tested internally for classes P6 and P7 of wear resistance in 2 million and 4 million passages, with very good results, comparable to those of a paint in a layer of more than 2 mm.

At the same time, the road marking presented a very rapid drying of about 5-10 seconds.

Also, the polyurethane paint for road markings thus obtained showed an easy application and an easy cleaning the equipments employed.

## Claims

1. Resin composition for polyurethane paints for road markings or floor markings, which comprises:
at least one polyol and/or polyether diamine, and at least one filler having the particle size less than 500µm, wherein the mass ratio polyol and/or polyether diamine to filler is from 1:3 to 1:8, preferably 1:4;
and:
- 1.0-10.0%, preferably about 5.0%, based on the mass of the filler of at least one filler wetting agent which is selected from the class of silicone surfactants (for example, polydimethylsiloxanes modified with polyethers) or 2-ethyl-haxyl-stearate and
- 0.5-10% based on the mass of the total resin composition of at least one viscosity modifying agent selected from 2-ethyl-hexyl-stearate.

2. Resin composition according to claim 1, wherein said at least one filler comprises one or more of : dolomite, quartz, calcium carbonate, talcum, titanium dioxide, sand, ground marble, preferably dolomite in the form of a mixture of two assortments of dolomite with the particle sizes of 100-250µm and 106-500 µm, respectively, in a mass ratio of 6:1.

3. Resin composition according to claim 2, wherein said at least one filler is made of a mixture of dolomite and titanium dioxide (TiO₂) in a mass ratio dolomite : (TiO₂) from 10:1 up to 15:1, preferably 12:1.

4. Resin composition according to claim 2, wherein said at least one filler comprises a mixture of dolomite, quartz and titanium dioxide, in a mass ratio dolomite: quartz:TiO₂ of 6:1:1.

5. Resin composition according to any one of the preceding claims, wherein said at least one filler has the particle size in the range of 20-400µm in diameter, preferably from 100 to 250 µm.

6. Resin composition according to any one of the preceding claims, which additionally comprises, in percentage by mass:
- 0.2 to 1.2%, preferably 0.8%, based on the total mass of the resin composition of at least one polymerization catalyst selected from the class of organo-metallic compounds, such as, for example, bis(dodecyl-thio-dioctyl)-stannane; and/or
- at least one pigment, aggregates and/or glass beads.

7. Resin composition according to claim 6 which comprises, in percentage by mass:
• 10-20% based on the total mass of the resin composition of said at least one polyol and/or polyether diamine;
• 40-80% based on the total mass of the resin composition of said at least one filler;
• 0.5-5.0%, preferably 3%, based on the total mass of the resin composition of said at least one viscosity modifying agent;
• 1.0-10.0%, preferably about 5.0%, based on the mass of the filler of said at least one filler wetting agent;
• 0.2 to 1.2%, preferably 0.8%, based on the total mass of the resin composition of said at least one polymerization catalyst;
• optionally, at least one pigment, aggregates and/or glass beads.

8. Resin composition according to claim 6, wherein said at least one filler has a particle diameter ranging from 20 to 200µm, preferably from 100 to 150µm and which comprises, in percentage by mass:
- 10-20% based on the total mass of the resin composition of said at least one polyol and/or polyether diamine;
- 40-80% based on the total mass of the resin composition of said at least one filler;
- 2.0 - 10.0%, preferably 5.0%, based on the total mass of the resin composition of said at least one viscosity modifying agent;
- 1.0-10.0%, preferably about 5.0%, based on the total mass of the filler of said at least one filler wetting agent;
- 0.2 to 1.2%, preferably 0.8%, related to the total resin composition mass of said at least one polymerization catalyst;
- optionally, at least one pigment, aggregates and/or glass beads.

9. Use of a resin composition which comprises at least one polyol and/or polyether diamine and at least one filler having the particle size less than 500µm, wherein the mass ratio polyol and/or polyether diamine : filler is from 1:3 to 1:8, preferably 1:4 in a polyurethane paint for road markings or floor markings.

10. Polyurethane paint for road markings or floor markings, which comprises a resin composition according to any one of the claims 1-9 and an isocyanate component consisting of one or more aliphatic and/or aromatic isocyanates, in a mass ratio resin composition : isocyanate from 1:0.5 to 6:1.

11. Polyurethane paint according to claim 10, wherein the isocyanate component comprises diphenylmethylene diizocyanate(MDI), hexamethylene diisocyanate (HDI) or a mixture thereof, preferably in a mass ratio HDI : MDI of 4:1.

12. Kit for the preparation of a polyurethane paint according to claims 10 or 11, which comprises:
(a) a first component containing:
- at least one polyol and/or polyether diamine and at least one filler having the particle size less than 500µm, wherein the filler mass polyol and/or polyether diamine to ratio is from 1:3 to 1:8, preferably 1:4;
as well as
- 1.0 -10.0%, preferably about 5.0%, based on the mass of the filler of at least one filler wetting agent, wherein said wetting agent can be selected from the class of silicone surfactants (for example, polydimethylsiloxanes modified with polyethers) or from 2-ethyl-hexyl-stearate and/or
- 0.5-10% based on the total mass of the resin composition of at least one viscosity modifying agent selected from 2-ethyl-hexyl-stearate,
and, optionally,
- 0.2 up to 1,2%, preferably 0.8%, based on the total mass of the resin composition of at least one polymerization catalyst selected from the class of organo-metallic compounds, such as, for example, bis(dodecyl-thio-dioctyl)-stannane; and/or
- at least one pigment, aggregate and/or glass beads,
and
(b) a second component comprising one or more aliphatic and/or aromatic isocyanates comprising diphenylmethylene diisocyanate (MDI), hexamethylene diisocyanate (HDI) or a mixture thereof, preferably in a HDI:MDI mass ratio of 4:1,
in a mass ratio component (a) to component (b) from 1:0.5 up to 6:1.

13. Method for the preparation of a polyurethane paint for road markings or floor markings according to claims 10 or 11, which comprises mixing up to homogenization the resin composition according to any one of the claims 1-8 with said one or more isocyanates according to claims 10 or 11.

14. Method according to claim 13 for the preparation, in an airless system, of a polyurethane paint for road markings or for floor markings, applicable in a thin layer, which comprises the steps:
• transferring the components consisting of the preferred resin composition according to claim 9 and said at least one isocyanate according to claims 14 or 15 in a mixing chamber of an application device, for example a spraying gun, optionally concomitantly with bringing the components to a temperature of 40° to 80°C, preferably about 50°C,
• ii) mixing the components in the mixing chamber, at a pressure from 60 to 400 bar, preferably about a pressure of 200 bar.

15. Method for the application onto the support of the paint for road marking or floor marking prepared according to the methods of claims 13 or 14, which comprises the steps:
i) - application of the paint onto the support by extrusion or screed/shoe/manual, in a layer from 1000µm up to 8000 µm, preferably of 1000 µm, 2000 µm or 3000 µm, or
- application of the polyurethane paint on to the support by spraying in a layer of a thickness from 400 µm to 1000 µm, preferably of 400 µm, 600 µm or 800 µm;
ii) optionally, scattering, for example by spraying, of glass beads onto the applied paint while it is still wet, preferably concomitantly with the preceding step.

## Patentansprüche

1. Harzzusammensetzung für Polyurethanfarben für Straßenmarkierungen oder Bodenmarkierungen, die umfasst:
mindestens ein Polyol und/oder Polyetherdiamin und mindestens einen Füllstoff mit einer Teilchengröße von weniger als 500 µm, wobei das Massenverhältnis von Polyol und/oder Polyetherdiamin zu Füllstoff 1:3 bis 1:8, vorzugsweise 1:4 beträgt; und:
- 1,0-10,0 %, vorzugsweise etwa 5,0 %, bezogen auf die Masse des Füllstoffs mindestens eines Füllstoffbenetzungsmittels, das aus der Klasse der Silikontenside (z. B. mit Polyethern modifizierte Polydimethylsiloxane) oder 2-Ethyl-haxyl- Stearat ausgewählt ist
und
- 0,5-10 %, bezogen auf die Masse der gesamten Harzzusammensetzung, von mindestens einem Viskositätsmodifizierendenmittel, aus 2-Ethylhexylstearat ausgewählt.

2. Harzzusammensetzung nach Anspruch 1, wobei der mindestens eine Füllstoff einen oder mehrere der folgenden umfasst: Dolomit, Quarz, Calciumcarbonat, Talkum, Titandioxid, Sand, gemahlener Marmor, vorzugsweise Dolomit in Form einer Mischung aus zwei Dolomitsortimenten mit den Partikelgrößen 100-250 µm bzw. 106-500 µm, im Massenverhältnis 6:1.

3. Harzzusammensetzung nach Anspruch 2, wobei der mindestens eine Füllstoff aus einer Mischung aus Dolomit und Titandioxid (TiO2) in einem Massenverhältnis Dolomit: (TiO2) von 10:1 bis 15:1, vorzugsweise 12:1 besteht.

4. Harzzusammensetzung nach Anspruch 2, wobei der mindestens eine Füllstoff eine Mischung aus Dolomit, Quarz und Titandioxid in einem Massenverhältnis von Dolomit:Quarz:TiO2 von 6:1:1 umfasst.

5. Harzzusammensetzung nach einem der vorhergehenden Ansprüche, wobei der mindestens eine Füllstoff eine Teilchengröße im Bereich von 20-400 µm im Durchmesser, vorzugsweise von 100 bis 250 µm, aufweist.

6. Harzzusammensetzung nach einem der vorhergehenden Ansprüche, die zusätzlich, in Massenprozent, umfasst:
- 0,2 bis 1,2 %, vorzugsweise 0,8 %, bezogen auf die Gesamtmasse der Harzzusammensetzung, mindestens eines Polymerisationskatalysators, ausgewählt aus der Klasse der metallorganischen Verbindungen, wie beispielsweise Bis(dodecyl-thio-dioctyl)-Stannan; und/oder
- mindestens ein Pigment, Zuschlagstoffe und/oder Glasperlen.

7. Harzzusammensetzung nach Anspruch 6, die in Masseprozent umfasst:
• 10-20 %, bezogen auf die Gesamtmasse der Harzzusammensetzung, des mindestens einen Polyols und/oder Polyetherdiamins;
• 40-80 %, bezogen auf die Gesamtmasse der Harzzusammensetzung, des mindestens einen Füllstoffs;
• 0,5-5,0 %, vorzugsweise 3 %, bezogen auf die Gesamtmasse der Harzzusammensetzung, des mindestens einen Viskositätsmodifizierendenmittels;
• 1,0-10,0 %, vorzugsweise etwa 5,0 %, bezogen auf die Masse des Füllstoffs, des mindestens einen Füllstoffbenetzungsmittels;
• 0,2 bis 1,2 %, vorzugsweise 0,8 %, bezogen auf die Gesamtmasse der Harzzusammensetzung, des mindestens einen Polymerisationskatalysators;
• gegebenenfalls mindestens ein Pigment, Zuschlagstoffe und/oder Glasperlen.

8. Harzzusammensetzung nach Anspruch 6, wobei der mindestens eine Füllstoff einen Teilchendurchmesser im Bereich von 20 bis 200 µm, vorzugsweise von 100 bis 150 µm aufweist, und die in Massenprozent umfasst:
- 10-20 %, bezogen auf die Gesamtmasse der Harzzusammensetzung, des mindestens einen Polyols und/oder Polyetherdiamins;
- 40-80 %, bezogen auf die Gesamtmasse der Harzzusammensetzung, des mindestens einen Füllstoffs;
- 2,0-10,0 %, vorzugsweise 5,0 %, bezogen auf die Gesamtmasse der Harzzusammensetzung, des mindestens einen Viskositätsmodifizierendenmittels;
- 1,0-10,0 %, vorzugsweise etwa 5,0 %, bezogen auf die Gesamtmasse des Füllstoffs, des mindestens einen Füllstoffbenetzungsmittels;
- 0,2 bis 1,2 %, vorzugsweise 0,8 %, bezogen auf die Gesamtmasse der Harzzusammensetzung des mindestens einen Polymerisationskatalysators;
- gegebenenfalls mindestens ein Pigment, Zuschlagstoffe und/oder Glasperlen.

9. Verwendung einer Harzzusammensetzung, die mindestens ein Polyol und/oder Polyetherdiamin und mindestens einen Füllstoff mit einer Teilchengröße von weniger als 500 µm umfasst, wobei das Massenverhältnis Polyol und/oder Polyetherdiamin : Füllstoff 1:3 bis 1:8, vorzugsweise 1:4 beträgt, in einer Polyurethanfarbe für Straßenmarkierungen oder Bodenmarkierungen.

10. Polyurethanfarbe für Straßenmarkierungen oder Bodenmarkierungen, die eine Harzzusammensetzung nach einem der Ansprüche 1 bis 9 und eine Isocyanatkomponente, bestehend aus einem oder mehreren aliphatischen und/oder aromatischen Isocyanaten umfasst, in einem Massenverhältnis Harzzusammensetzung : Isocyanat von 1:0,5 bis 6:1.

11. Polyurethanfarbe nach Anspruch 10, wobei die Isocyanatkomponente Diphenylmethylendiisocyanat (MDI), Hexamethylendiisocyanat (HDI) oder eine Mischung davon umfasst, vorzugsweise in einem Massenverhältnis HDI : MDI von 4 : 1.

12. Kit zur Herstellung eines Polyurethanfarbes nach Anspruch 10 oder 11, der umfasst:
(a) eine erste Komponente, die Folgendes enthält:
- mindestens ein Polyol und/oder Polyetherdiamin und mindestens einen Füllstoff mit einer Teilchengröße von weniger als 500 µm, wobei das Verhältnis von Füllstoffmasse Polyol und/oder Polyetherdiamin zu 1:3 bis 1:8, vorzugsweise 1:4 beträgt;
zusammen mit
- 1,0 -10,0 %, vorzugsweise etwa 5,0 %, bezogen auf die Masse des Füllstoffs mindestens eines Füllstoffnetzmittels, wobei das Netzmittel aus der Klasse der Silikontenside (beispielsweise mit Polyethern modifizierte Polydimethylsiloxane) oder 2-Ethyl-hexyl-stearat ausgewählt sein kann, und/oder
- 0,5-10 %, bezogen auf die Gesamtmasse der Harzzusammensetzung, mindestens eines Viskositätsmodifizierungsmittels, ausgewählt aus 2-Ethylhexylstearat,
und optional
- 0,2 bis 1,2 %, vorzugsweise 0,8 %, bezogen auf die Gesamtmasse der Harzzusammensetzung, mindestens eines Polymerisationskatalysators, ausgewählt aus der Klasse der metallorganischen Verbindungen, wie beispielsweise Bis(dodecyl-thio- Dioctyl)-stannan; und/oder
- mindestens ein Pigment, Zuschlagstoff und/oder Glasperlen,
und
(b) eine zweite Komponente, umfassend ein oder mehrere aliphatische und/oder aromatische Isocyanate, umfassend Diphenylmethylendiisocyanat (MDI), Hexamethylendiisocyanat (HDI) oder eine Mischung davon, vorzugsweise in einem HDI:MDI-Massenverhältnis von 4:1,
in einem Massenverhältnis von Komponente (a) zu Komponente (b) von 1:0,5 bis 6:1.

13. Verfahren zur Herstellung einer Polyurethanfarbe für Straßenmarkierungen oder Bodenmarkierungen nach den Ansprüchen 10 oder 11, umfassend vermischen zur Homogenisierung der Harzzusammensetzung nach einem der Ansprüche 1-8 mit dem einen oder den mehreren Isocyanaten nach Ansprüche 10 oder 11.

14. Verfahren nach Anspruch 13 zur Herstellung einer in dünner Schicht applizierbaren Polyurethanfarbe für Fahrbahnmarkierungen oder für Bodenmarkierungen in einem Airless-System, umfassend die Schritte:
• Überführen der Komponenten bestehend aus der bevorzugten Harzzusammensetzung nach Anspruch 9 und dem mindestens einen Isocyanat nach Anspruch 14 oder 15 in eine Mischkammer einer Applikationsvorrichtung, beispielsweise einer Sprühpistole, gegebenenfalls begleitend zum Erhitzen der Komponenten von 40° bis 80°C, vorzugsweise etwa 50°C,
• ii) Mischen der Komponenten in der Mischkammer bei einem Druck von 60 bis 400 bar, vorzugsweise einem Druck von etwa 200 bar.

15. Verfahren zum Aufbringen der nach den Verfahren der Ansprüche 13 oder 14 hergestellten Farbe zur Straßenmarkierung oder Bodenmarkierung auf den Träger, umfassend die Schritte:
i) - Auftragen die Farbe auf den Träger durch Extrusion oder Estrich/Schuh/manuell, in einer Schicht von 1000 µm bis 8000 µm, vorzugsweise von 1000 µm, 2000 µm oder 3000 µm, oder
- Aufbringen die Polyurethanfarbe auf den Träger durch Aufsprühen in einer Schichtdicke von 400 µm bis 1000 µm, vorzugsweise von 400 µm, 600 µm oder 800 µm;
ii) gegebenenfalls Aufstreuen, beispielsweise durch Aufsprühen, von Glasperlen auf den noch feuchte aufgetragene Farbe, vorzugsweise gleichzeitig mit dem vorhergehenden Schritt.

## Revendications

1. Composition de résine pour peintures polyuréthanes pour marquage routier ou marquage au sol, qui comprend :
au moins un polyol et/ou polyéther diamine, et au moins un remplissage ayant une granulométrie inférieure à 500 µm, le rapport massique polyol et/ou polyéther diamine sur remplissage étant de 1:3 à 1:8, de préférence 1:4 ;
et:
- 1,0-10,0 %, de préférence environ 5,0 %, par rapport à la masse de le remplissage, d'au moins un agent mouillant du remplissage qui est choisi dans la classe des tensioactifs siliconés (par exemple, les polydiméthylsiloxanes modifiés par des polyéthers) ou 2-éthyl-haxyl- stéarate et
- 0,5 à 10 % par rapport à la masse de la composition de résine totale, d'au moins un agent modificateur de viscosité choisi parmi le 2-éthyl-hexyl-stéarate.

2. Composition de résine selon la revendication 1, dans laquelle ledit au moins un remplissage comprend un ou plusieurs parmi: dolomite, quartz, carbonate de calcium, talc, dioxyde de titane, sable, marbre broyé, de préférence de la dolomite sous la forme d'un mélange de deux assortiments de dolomite avec les tailles de particules de 100-250 µm et 106-500 µm, respectivement, dans un rapport massique de 6:1.

3. Composition de résine selon la revendication 2, dans laquelle ledit au moins un remplissage est constituée d'un mélange de dolomite et de dioxyde de titane (TiO₂) dans un rapport massique dolomite : (TiO₂) de 10 :1 jusqu'à 15 :1, de préférence 12 : 1.

4. Composition de résine selon la revendication 2, dans laquelle ledit au moins un remplissage comprend un mélange de dolomite, quartz et dioxyde de titane, dans un rapport massique dolomite:quartz:TiO₂ de 6:1:1.

5. Composition de résine selon l'une quelconque des revendications précédentes, dans laquelle ledit au moins un remplissage a une granulométrie dans la plage de 20 à 400 µm de diamètre, de préférence de 100 à 250 µm.

6. Composition de résine selon l'une quelconque des revendications précédentes, qui comprend en outre, en pourcentage massique :
- 0,2 à 1,2 %, de préférence 0,8 %, par rapport à la masse totale de la composition de résine, d'au moins un catalyseur de polymérisation choisi dans la classe des composés organométalliques, comme par exemple le bis(dodécyl-thio-dioctyl)-stannane; et/ou
- au moins un pigment, des agrégats et/ou des billes de verre.

7. Composition de résine selon la revendication 6 qui comprend, en pourcentage massique :
• 10 à 20 % par rapport à la masse totale de la composition de résine dudit au moins un polyol et/ou polyéther diamine;
• 40 à 80 % par rapport à la masse totale de la composition de résine, dudit au moins un remplissage;
• 0,5-5,0 %, de préférence 3 %, par rapport à la masse totale de la composition de résine, dudit au moins un agent modificateur de viscosité; • 1,0-10,0 %, de préférence environ 5,0 %, par rapport à la masse de le remplissage dudit au moins un agent mouillant de charge;
• 0,2 à 1,2 %, de préférence 0,8 %, par rapport à la masse totale de la composition de résine, dudit au moins un catalyseur de polymérisation;
• éventuellement, au moins un pigment, des agrégats et/ou des billes de verre.

8. Composition de résine selon la revendication 6, dans laquelle ledit au moins un remplissage a un diamètre de particules allant de 20 à 200µm, de préférence de 100 à 150µm et qui comprend, en pourcentage massique:
- 10-20% sur la base de la masse totale de la composition de résine, dudit au moins un polyol et/ou polyéther diamine;
- 40 à 80 % par rapport à la masse totale de la composition de résine, dudit au moins un remplissage;
- 2,0 à 10,0 %, de préférence 5,0 %, sur la base de la masse totale de la composition de résine, dudit au moins un agent modificateur de viscosité;
- 1,0-10,0 %, de préférence environ 5,0 %, par rapport à la masse totale de le remplissage dudit au moins un agent mouillant du remplissage;
- 0,2 à 1,2%, de préférence 0,8%, par rapport à la masse totale de composition de résine dudit au moins un catalyseur de polymérisation;
- éventuellement, au moins un pigment, des agrégats et/ou des billes de verre.

9. Utilisation d'une composition de résine qui comprend au moins un polyol et/ou polyéther diamine et au moins un remplissage ayant une granulométrie inférieure à 500 µm, dans laquelle le rapport massique polyol et/ou polyéther diamine : remplissage est de 1:3 à 1:8, de préférence 1:4, dans une peinture polyuréthane pour marquage routier ou marquage au sol.

10. Peinture polyuréthane pour marquage routier ou marquage au sol, qui comprend une composition de résine selon l'une quelconque des revendications 1 à 9 et un composant isocyanate constitué d'un ou plusieurs isocyanates aliphatiques et/ou aromatiques, dans un rapport massique composition de résine : isocyanate de 1:0,5 à 6:1.

11. Peinture polyuréthane selon la revendication 10, dans laquelle le composant isocyanate comprend du diisocyanate de diphénylméthylène (MDI), du diisocyanate d'hexaméthylène (HDI) ou un mélange de ceux-ci, de préférence dans un rapport massique HDI : MDI de 4:1.

12. Kit pour la préparation d'une peinture polyuréthane selon les revendications 10 ou 11, qui comprend:
(a) un premier composant contenant:
- au moins un polyol et/ou polyéther diamine et au moins un remplissage ayant une granulométrie inférieure à 500 µm, dans laquelle le rapport massique de polyol et/ou polyéther diamine sur remplissage est de 1:3 à 1:8, de préférence 1:4;
ainsi que
- 1,0 -10,0 %, de préférence environ 5,0 %, par rapport à la masse de le remplissage, d'au moins un agent mouillant du remplissage, ledit agent mouillant pouvant être choisi dans la classe des tensioactifs siliconés (par exemple, les polydiméthylsiloxanes modifiés par des polyéthers) ou parmi stéarate de 2-éthyl-hexyle et/ou
- 0,5-10% par rapport à la masse totale de la composition de résine, d'au moins un agent modificateur de viscosité choisi parmi le 2-éthyl-hexyl-stéarate,
et, éventuellement,
- 0,2 jusqu'à 1,2 %, de préférence 0,8 %, par rapport à la masse totale de la composition de résine d'au moins un catalyseur de polymérisation choisi dans la classe des composés organométalliques, tels que, par exemple, le bis(dodécyl-thio-dioctyl)-stannane; et/ou
- au moins un pigment, granulat et/ou billes de verre,
et
(b) un deuxième composant comprenant un ou plusieurs isocyanates aliphatiques et/ou aromatiques comprenant le diisocyanate de diphénylméthylène (MDI), diisocyanate d'hexaméthylène (HDI) ou un mélange de ceux-ci, de préférence dans un rapport massique HDI:MDI de 4:1,
dans un rapport massique du composant (a) au composant (b) de 1:0,5 jusqu'à 6:1.

13. Procédé de préparation d'une peinture polyuréthane pour marquage routier ou marquage au sol selon les revendications 10 ou 11, qui comprend mélanger jusqu'à homogénéisation de la composition de résine selon l'une quelconque des revendications 1 à 8 avec lesdits un ou plusieurs isocyanates selon les revendications 10 ou 11.

14. Procédé selon la revendication 13 pour la préparation, en système airless, d'une peinture polyuréthane pour marquage routier ou pour marquage au sol, applicable en couche mince, qui comprend les étapes:
• transférer les composants constitués par la composition de résine préférée selon la revendication 9 et ledit au moins un isocyanate selon les revendications 14 ou 15 dans une chambre de mélange d'un dispositif d'application, par exemple un pistolet de pulvérisation, éventuellement concomitamment à apportant les composants a une température de 40° à 80°C, de préférence d'environ 50°C,
• ii) mélanger les composants dans la chambre de mélange, à une pression de 60 à 400 bars, de préférence environ une pression de 200 bars.

15. Procédé d'application sur le support de la peinture de signalisation routière ou de marquage au sol préparée selon les procédés des revendications 13 ou 14, qui comprend les étapes:
i) - application de la peinture sur le support par extrusion ou chape/sabot/manuel, en couche de 1000µm jusqu'à 8000 µm, de préférence de 1000 µm, 2000 µm ou 3000 µm, ou
- application de la peinture polyuréthane sur le support par pulvérisation en couche d'une épaisseur de 400 µm à 1000 µm, de préférence de 400 µm, 600 µm ou 800 µm,
ii) éventuellement, saupoudrage, par exemple par pulvérisation, de billes de verre sur la peinture alors qu'elle est encore humide, de préférence concomitamment à l'étape précédente.
